# EUROPEAN PATENT APPLICATION

(11) **EP 2 730 330 A1**
(43) Date of publication of application: **14.05.2014**
(21) Application number: 12191951.8
(22) Date of filing: 09.11.2012
(51) Int. Cl.: B01D 61/22

(54) **Membrane filtration assembly and method of controlling trans-membrane pressure**

(71) Applicant: Tine SA, 0191 Oslo (NO)
(72) Inventor: Hoffmann, Tom, 1550 HØLEN (NO)
(74) Representative: Livgard, Kim Are Birkeli

(57) **Abstract**

The present invention relates to a membrane filtration assembly (1) and a method of controlling trans-membrane pressure (TMP) by means of a permeate side co-crrent cross-flow (16,16'). Said membrane filtration assembly comprising a trans-membrane pressure control system including pressure sensors (32,33,34,35) and flow control means (20, 22) for controlling the trans-membrane pressure (TMP) profile versus the lenght of the module.

## Description

The present invention relates to a membrane filtration assembly and a method of controlling trans-membrane pressure (TMP). Said membrane filtration assembly comprising a trans-membrane pressure control system for controlling the trans-membrane pressure (TMP).

### Background

Microfiltration and ultrafiltration are well known separation techniques used within a large number of industries such as the beverage industry (beer, wine, juice etc.), the dairy industry, the food industry including slaughterhouses and fish harvesting plants, the biotech and pharmaceutical industry, waste water and effluent treatment, petroleum industry, water cleaning as well as other technical areas.

Today a number of different membrane filter modules for tangential flow membrane filtration are commercially available; two categories of such membrane filter modules are gradient membranes and UTP membranes.

Gradient membranes have increased permeation resistance towards the input side of the membrane module and thereby maintain a low but uniform trans-membrane pressure.

UTP membrane system requires recycling of permeate and obtains a low uniform trans-membrane pressure with high cross-flow velocity.

Control and regulation of velocities and pressures influences the fouling on the membrane surface which again influences the filtration properties, the flux through the membrane and the product yield.

### Prior art

WO2009/035700 discloses a filtration process and system mainly for use with spiral wound membranes. Disclosed is a combination of a permeate recycle loop with periodically pressure pulsing by reducing the pressure difference between the permeate and the retentate both at the inlet and at the outlet. Additionally periodic backpressure/backflow is applied by either increasing the permeate pressure or decreasing the retentate pressure, during which process a cross flow on both sides is maintained. Regulating the permeate flow rate into the permeate side to obtain the same transmembrane pressure at the inlet and the outlet side is mentioned for spiral wound membrane filters. The disclosed control system is focused on controlling the pressure during back flushing.

US6,551,648 discloses a method for selective separation of milk products avoiding the homogenisation of fat globules. The disclosed method employs a microfiltration system utilizing a retentate circulation circuit and a permeate circulation circuit with the intend to obtain an uniform trans-membrane pressure. There is no regulated valve at the permeate product outlet as such a valve would be destructive to the intended purpose and result in homogenisation due to the forces that would act on the fat globules when they pass through the valve. In the disclosed method the flow rate of the retentate pump is kept constant and the permeate circulation pump with variable flow rate was regulated automatically by the charge loss (difference between inlet pressure and outlet pressure) created in the retentate circuit. The method provides limited possibility to adjust the retentate flow rate to the viscosity of the retentate.

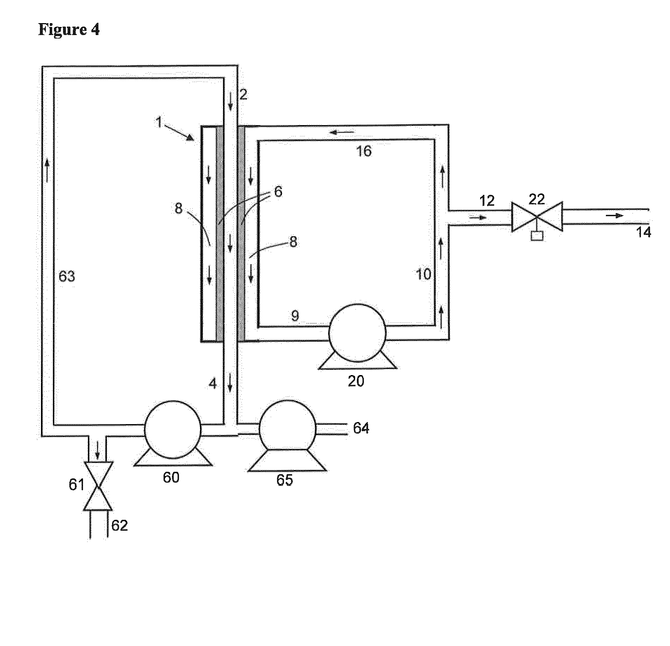

EP747111 discloses a method for running a number of filter modules connected in series, where both the retentate and permeate are connected in series. The pressure loss on the retentate side is measured and the permeate flow rate is regulated by throttle valves in the permeate stream downstream each module to provide an equivalent pressure loss on the permeate side. Figure 4 illustrates that this control system provides a trans-membrane pressure that measured as an average is equal but where along the way (w) considerable fluctuations are experienced. The disclosed system is especially adapted to situations where the viscosity of the retentate increases between the inlet and outlet of each module requiring an equivalent adjustment on the permeate side.

In filtration systems based on the use of ceramic membranes, the flow rate of the circulating retentate and permeate is normally significantly larger than the amount of fluid to be filtrated that is fed to the system, also called feed rate. The circulation flow rate may be 10-200 times larger than the feed rate, preferably 50-125, more preferably 90-110 times larger. With these flow rates there will be no significant change in retentate viscosity after passing one membrane filter module.

However, when filtering for instance bacteria from milk using a ceramic membrane, even a very small increase in trans-membrane pressure, such as 0.1 bar will result in a doubling of the amount of bacteria that passes the membrane thereby reducing the efficiency of the filter with 50 %. For these and other purposes there is a need for obtaining even more accurate control of the trans-membrane pressure.

### Objectives of the invention

Although the general idea of achieving uniform trans-membrane pressure (UTMP) to improve the efficiency and performance of the membrane filtration process is well known, there is still a need for an improved way of controlling the membrane filtration process which allows for the use of the UTMP principle.

Accordingly, it is an objective of the present invention to provide a membrane filtration assembly which maintain stable trans-membrane pressure over time during membrane filtration operation.

Further, it is an objective of the present invention to provide a membrane filtration assembly which maintain uniform trans-membrane pressure over time during membrane filtration operation.

It is a goal that a stable and/or uniform trans-membrane pressure is maintained during membrane filtration operation and that the permeate product volume may be regulated independently from the control of the trans-membrane pressure.

In a **first aspect,** the present invention provides a membrane filtration assembly, comprising at least one membrane filter module; a permeate recycle loop; and a trans-membrane pressure control system; wherein said at least one membrane filter module comprises a retentate inlet, a retentate outlet, a permeate inlet, and a permeate outlet; said permeate recycle loop bringing the permeate outlet in fluid communication with the permeate inlet via a flow providing means, where the permeate recycle loop comprises a permeate product outlet with a flow control means controlling the outlet of permeate product from the permeate recycle loop; said trans-membrane pressure control system comprises a first pressure sensor arranged in or near the retentate inlet, a second pressure sensor arranged in or near the permeate inlet, a third pressure sensor arranged in or near the retentate outlet, a fourth pressure sensor arranged in or near the permeate outlet and a control unit connected to receive signals from the four pressure sensors and either connected to send a regulating signal to said flow providing means or connected to send a regulating signal to said flow providing means and said flow control means.

Said control unit may be connected to send a regulating signal only to said flow providing means.

Said control unit may be connected to send a regulating signal only to said flow control means.

Said control unit may be connected to send a regulating signal to said flow providing means and to said flow control means.

In one embodiment, the first pressure sensor and the second pressure sensor form part of a first differential pressure transmitter, and the third pressure sensor and the fourth pressure sensor form part of a second differential pressure transmitter, where the first and the second differential pressure transmitters are connected to the control unit.

According to another embodiment, the control unit regulates the flow control means to provide a stable and constant trans-membrane pressure at the inlets. The membrane filter module is preferably arranged to allow for co-current flow of retentate and permeate. The retentate and permeate inlets and outlets are respectively arranged at opposite ends of the filter module. Accordingly the trans-membrane pressure at the inlets is the pressure difference between the retentate and the permeate at their respective inlets at one end of the filter module and the trans-membrane pressure at the outlets is the pressure difference between the retentate and the permeate at their respective outlets at the opposite end of the filter module.

In a further embodiment, the control unit regulates the flow providing means to provide a stable and constant trans-membrane pressure at the outlets.

Said flow providing means can be any kind of pump or other means arranged to make the permeate flow trough the permeate recycle loop.

In another embodiment, the present invention provides a membrane filtration assembly wherein the control unit receives signals about the trans-membrane pressure at the inlet and the trans-membrane pressure at the outlet and regulates said flow providing means to equalize the trans-membrane pressure at the outlet to the trans-membrane pressure at the inlet.

In one embodiment, the present invention provides a membrane filtration assembly wherein the assembly further comprises a flow sensor downstream of said flow control means connected to send a signal to the control unit or to a second control unit, and wherein the control unit or the second control unit regulates the flow control means to provide a desired permeate product flow, such as e.g. constant permeate product flow.

In one embodiment, the present invention provides a membrane filtration assembly wherein the assembly further comprises at least one device suitable for measuring the concentration of certain compounds or group of compounds.

In one embodiment, a device is arranged to measure the concentration of a compound or group of compounds, e.g. casseine, present in the retentate flow. Said device is typically connected to send a signal to the control unit or a second control unit and the control unit or the second control unit regulates the flow control means to provide a desired permeate product flow. By increasing the permeate product flow, the concentration of said compound or group of compounds in the retentate flow is increased. Any change in trans-membrane pressure along the membrane surfaces caused by a change in the permeate product flow is typically compensated for by regulating the flow providing means.

In another embodiment, a first device is arranged to measure the concentration of a compound or group of compounds, e.g. casseine, present in the retentate flow and a second device is arranged to measure the concentration of a compound or group of compounds, e.g. lactose, present in the permeate flow.

Lactose is a very small molecule and will typically be present in equal amounts on both sides of the membrane filter.

Said first device is typically connected to send a signal to the control unit or a second control unit and the control unit or the second control unit regulates the flow control means to provide a desired permeate product flow. By increasing the permeate product flow, the concentration of said compound or group of compounds in the retentate flow is increased.

Said second device is typically connected to send a signal to the control unit, a second control unit or a third control unit and the control unit, the second control unit or the third control unit regulates the amount of water added to the feed stream. By increasing the amount of water added to the feed stream, the retentate concentration typically decreases. The change in retentate concentration caused by a change in the amount of water added to the feed stream is typically compensated for by regulating the flow control means. Said flow control means being regulated based on signals received from said control unit or second control unit which again receives signals from said first device. Thus, by adding water to the feed stream and increase the permeate product flow, the amount of lactose present in the retentate flow may be decreased. Any change in trans-membrane pressure along the membrane surfaces caused by a change in the permeate product flow and/or change in the amount of water added to the feed stream is typically compensated for by regulating the flow providing means.

In another embodiment of the present invention the flow providing means is regulated to provide a constant permeate flow and the flow control means is regulated to keep the trans membrane pressure at the inlets equal to the trans-membrane pressure at the outlets.

Said flow control means may be an adjustable valve or any other means capable of regulating the flow trough the permeate product outlet.

In yet another embodiment, the at least one membrane filter module comprises a ceramic membrane filter.

In a further embodiment, the membrane filtration assembly further comprises a retentate recycle loop bringing the retentate inlet in fluid communication with the retentate inlet via a second flow providing means, the retentate recycle loop further comprises a feed stream inlet.

In one embodiment, the membrane filtration assembly further comprises a bypass conduit arranged between the permeate outlet 18 and the inlet to the flow providing means 20. A controllable valve is arranged on the bypass conduit. If the controllable valve is in open position, the bypass conduit brings the permeate outlet in fluid communication with the permeate inlet bypassing the flow providing means 20. If the controllable valve is in closed position, the permeate outlet is brought in fluid communication with the permeate inlet via the flow providing means 20. The controllable bypass provides for optional additional adjustment of the permeate circulation flow and equalization of the trans-membrane pressure.

In one embodiment, the controllable valve being arranged on the bypass conduit is connected to and receives signals from the control unit. The control unit sending signals to said controllable valve and thereby regulates the flow through the bypass conduit.

In another embodiment according to the present invention, the membrane filtration assembly does not comprise said bypass conduit arranged between the permeate outlet and the inlet to the flow providing means.

In one embodiment according to the present invention, said membrane filtration assembly being a membrane filtration assembly for processing dairy products by means of membrane filtration. Said processing of dairy products being selected from the group consisting of i) removal of bacteria and/or bacterial spores from milk; ii) obtaining milk with a specific concentration of casein; iii) obtaining milk with a specific concentration of lactose.

In a **second aspect,** the present invention provides a method of controlling the trans-membrane pressure of a membrane filtration assembly, said membrane filtration assembly comprising at least one membrane filter module comprising a retentate inlet, a retentate outlet, a permeate inlet, and a permeate outlet; and a permeate recycle loop bringing the permeate outlet in fluid communication with the permeate inlet via a flow providing means, where the permeate recycle loop comprises a permeate product outlet with a flow control means controlling the outlet of permeate product from the permeate recycle loop; said method comprising the following steps: measuring the pressure in or near the retentate inlet, the permeate inlet, the retentate outlet, and the permeate outlet and calculating the trans-membrane pressure at the inlets and the trans-membrane pressure at the outlets; or measuring the trans-membrane pressure at the inlets and the trans-membrane pressure at the outlets; and either regulating said flow providing means to keep the trans-membrane pressure at the outlets equal to the trans-membrane pressure at the inlets; or regulating said flow controlling means to keep the trans-membrane pressure at the inlets equal to the trans-membrane pressure at the outlets; or regulating said flow controlling means to keep a constant flow and regulating said flow providing means to keep the trans-membrane pressure at the inlets equal to the trans-membrane pressure at the outlets.

The method may further comprise either
regulating the flow control means to keep the trans-membrane pressure at the inlet stable and constant, or
measuring the flow of permeate product and regulating the flow control means to keep the flow of permeate product constant.

In one embodiment of the method according to the present invention, the trans-membrane pressure at the inlet is measured and/or calculated by the signal from the first and second pressure sensors. The control unit regulates and adjusts the flow control means to keep a constant trans-membrane pressure at the inlet. Further the trans-membrane pressure at the outlet is measured and/or calculated by the signal from the third and fourth pressure sensors. The control unit regulates and adjusts the flow providing means to keep a constant trans-membrane pressure at the outlet. Accordingly the method provides a more or less stable TMP at both the inlet and the outlet.

In another embodiment of the method according to the present invention the flow of permeate product is measured and the flow control means is regulated to keep the flow of permeate product constant. This regulation of the flow control means results in changes in the trans-membrane pressure at the inlets and according to the present invention said flow providing means is regulated to keep the trans-membrane pressure at the outlet equal to the trans-membrane pressure at the inlet.

In a further embodiment of the method according to the present invention the flow of permeate out of the flow providing means is controlled/regulated/measured to provide a constant flow and the flow control means is regulated to keep the trans-membrane pressure at the inlets equal to the trans-membrane pressure at the outlets. This regulation of the flow control means results in changes in the trans-membrane pressure at the inlets and according to the present invention said flow providing means is regulated to keep the trans-membrane pressure at the outlet equal to the trans-membrane pressure at the inlet.

In one embodiment of the present invention the trans-membrane pressure at the inlet and the trans-membrane pressure at the outlet are regulated to be equal.

In one embodiment, the trans-membrane pressure at the inlet deviates less than 0.1 bar from a preselected intended trans-membrane pressure, preferably less than 0.05 bar.

In one embodiment, the trans-membrane pressure at the outlet deviates less than 0.1 bar from a preselected intended trans-membrane pressure, preferably less than 0.05 bar.

In one further embodiment, the trans-membrane pressure at the outlet deviates less than 0.1 bar from the trans-membrane pressure at the inlet.

In one embodiment of the method according to the present invention, the membrane filtration assembly further comprises a bypass conduit arranged between the permeate outlet 18 and the inlet to the flow providing means 20. A controllable valve is arranged on the bypass conduit. If the controllable valve is in open position, the bypass conduit brings the permeate outlet in fluid communication with the permeate inlet bypassing the flow providing means 20. If the controllable valve is in closed position, the permeate outlet is brought in fluid communication with the permeate inlet via the flow providing means 20. The controllable bypass provides for optional additional adjustment of the permeate circulation flow and equalization of the trans-membrane pressure.

In one embodiment, the controllable valve being arranged on the bypass conduit is connected to and receives signals from the control unit. The control unit sending signals to said controllable valve and thereby regulates the flow through the bypass conduit.

In another embodiment according to the present invention, the membrane filtration assembly does not comprise said bypass conduit arranged between the permeate outlet 18 and the inlet to the flow providing means 20.

The term "membrane filter module" as used herein refers to an elongated filter module comprising at least one tubular channel, where the wall of the tubular channel comprises the membrane surface with a selected cut point to obtain the intended separation. The filter module may comprise a support or backing material supporting the at least one membrane wall of the at least one tubular channel. The filtration spectrum of the membrane filter can be nanofiltration, ultrafiltration or microfiltration, with cut off points anywhere between 0.0005 and 5 µm or molecular weights between 100 and 1.0 10⁶.

In a preferred embodiment the membrane filter module comprises a ceramic membrane filter. Said ceramic membrane filter preferably being a ceramic tubular element comprising at least one tubular channel. The membrane filter module may comprise any number of tubular channels with walls comprising the membrane surface, such as 1, 3, 7, 9, 16, 19, 23, 25, 37, 39 or 93 tubular channels.

In a preferred embodiment, the retentate/feed fluid stream and the permeate recycle stream flow co-currently through the membrane filter module.

In one embodiment, the membrane filtration assembly comprises at least one permeate channel comprising at least one ceramic membrane module with at least one retentate fluid channel covered with a filtration membrane. The retentate inlet is in fluid communication with the retentate outlet via the at least one retentate fluid channel and the permeate inlet is in fluid communication with the permeate outlet via the at least one permeate channel.

It is preferred that the membrane filter module further comprises an outer shell enclosing the at least one permeate channel and forming an enclosed space there between, and a thermal control liquid inlet and a thermal control liquid outlet where the thermal control liquid inlet and the thermal control liquid outlet are in fluid communication via the enclosed space.

In case of a thermal control liquid, it is preferred that the temperature regulating fluid also flows co-currently through the filter module.

In one embodiment according to the present invention, said method of controlling the trans-membrane pressure of a membrane filtration assembly being a method for controlling the trans-membrane pressure of a membrane filtration assembly for processing dairy products by means of membrane filtration. Said processing of dairy products being selected from the group consisting of i) removal of bacteria and/or bacterial spores from milk; ii) obtaining milk with a specific concentration of casein; iii) obtaining milk with a specific concentration of lactose.

The term "inlet" as employed here accordingly refers to inlet side of the filter module where both retentate/feed fluid and permeate recycle stream enter the filter module, and the "outlet" is the opposite end where the permeate stream and the retentate stream leave the filter module.

The term "stable and constant" as employed here refers to a very limited deviation from a predefined value. A trans-membrane pressure is here considered to be constant when the deviation is less than 2%, preferably less than 1%, more preferably less than 0.5% or less than 0.1%.

The term "equal" refers similarly to a very limited pressure difference, e.g. no pressure difference.

The term "constant flow" means within a predefined flow range, where a flow measurement outside the predefined flow range will initiate an adjustment of the valve controlling the flow.

The term "in or near" as used here in connection with the arrangement of pressure sensors and the measuring of pressure refers to a position where the sensor is in pressure sensing contact with the fluid that enters or leaves the filter module respectively, at a position as close as practical possible to the filter membrane to limit the influence of any pressure changes through passages, changes in flow direction etc. The term is equivalent to the term "at or close to".

The present membrane filtration assembly and method are provided to control a membrane filter assembly to either provide a constant flow of permeate product or operate at a constant trans-membrane pressure or any variation thereof. These are the intended goals; however as will be evident for a person skilled in the art, with such a system there will be constant changes and the intention is to compensate for these changes.

### Brief description of the drawings

The present invention will be described in further detail with reference to the enclosed figures, where
**Figure 1** schematically illustrates a first embodiment of the present invention;
**Figure 2** schematically illustrates a second embodiment of the present invention;
**Figure 3a** illustrates a cross sectional view of a possible configuration of a membrane filter module applicable for use with the present invention;
**Figure 3b** is an enlarged cross sectional view a long the line A-A of the membrane filter module of figure 3 a.
**Figure 4** illustrates a continuously filtration system with retentate and permeate recirculation.
**Figure 5** illustrates a system comprising two membrane filter modules.
**Figure 6** illustrates a batch filtration system with retentate and permeate recirculation.
**Figure 7** is a graph showing the variation and regulation of TMPᵢₙₗₑₜ and TMPₒᵤₜₗₑₜ in an experiment utilizing the present invention.

The provided drawings are schematic illustrations showing the main principles, the size of the different elements may have been increased or decreased relative to other elements to improve the illustration. A person skilled in the art will appreciate that the main principle of the present invention can be employed with out diverting from the scope of the present invention as defined by the claims.

### Principal description of the invention

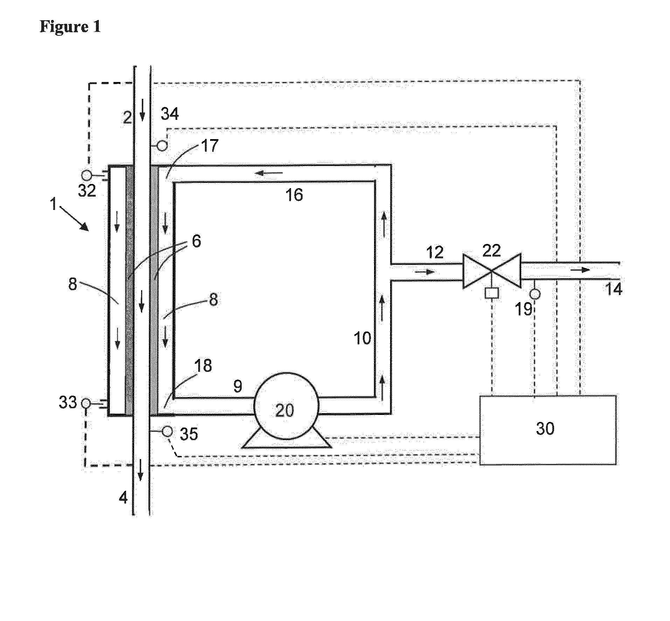

Figure 1 illustrates a first embodiment of the present invention. Here a filter module 1 comprises a feed inlet 2 providing a cross flow of a feed stream optionally including recirculated retentate to the retentate side of a membrane 6. The remaining parts of the feed stream which does not pass trough the membrane 6 leave as retentate stream 4 which optionally may be recirculated to form at least part of said feed stream 2. The fluid passing the membrane 6 enters the permeate side 8 of the filter module 1 and is combined with the circulating stream of permeate. The stream 9 from the permeate outlet 18 enters a pump 20 providing pressure thereto and circulation thereof. The pressurised stream 10 is split in a permeate product stream 12 and a permeate recycle stream 16. The latter entering the membrane filter module at the permeate inlet 17. A valve 22 is arranged to control the amount of permeate product stream 12 being allowed to leave the system as stream 14.

A control unit 30 receives signals from a pressure sensor 34 measuring the pressure on the retentate side of the membrane near the inlet, from a pressure sensor 32 measuring the pressure on the permeate side of the membrane near the inlet, from a pressure sensor 35 measuring the pressure on the retentate side of the membrane near the outlet, and from a pressure sensor 33 measuring the pressure on the permeate side of the membrane near the outlet. The control unit calculates the trans-membrane pressure at the inlet and at the outlet. Alternatively the sensors 32+34 and 33+35 are differential transmitters measuring and the pressure difference so that the signal provided to the control unit represents the trans-membrane pressure at the inlet and the outlet respectively. The control unit is further connected to the permeate pump 20 such that the control unit transmits a regulating signal to the pump 20 and thereby regulates the pressure/fluid flow provided by the pump 20. The control unit is design to regulate the performance of the permeate pump 20 to provide a constant and in one embodiment uniform trans-membrane pressure. A uniform trans-membrane pressure is obtained when the trans-membrane pressure at the inlet (TMPᵢₙ) defined as the difference between the pressure on the retentate side near the retentate inlet and the pressure on the permeate side at or near the permeate inlet is equal to the trans membrane pressure at the outlet (TMPₒᵤₜ) calculated/measured as the difference in pressure on the retentate side near the retentate outlet and the pressure on the permeate side near the permeate outlet. A flow sensor 19 is provided in the line 14 measuring the rate of production of the permeate product. The sensor is connected to a control unit. In figure 1 it is control unit 30 however it could equally be a separate control unit.

There are generally two main methods of running the filtration process.

In the first method the TMPᵢₙ is kept constant throughout the filtration process. According to a first embodiment of the present invention a desired value for TMPᵢₙ is determined and achieved after an initial upstart phase. The control unit is configured to regulate the valve 22 and the permeate product stream 14 to provide a constant TMPᵢₙ. TMPₒᵤₜ is measured and through regulation of pump 20 regulated to the same value as TMPᵢₙ. and thereby keep the system in regulated balance.

Over time the membrane surface may experience fouling, the composition of the feed fluid may change, the temperature may change or other parameters may vary.

These changes or variations may result in an increase in pressure on the retentate side, the control mechanism will then try to keep TMPᵢₙ constant by tighten the valve to increase the pressure on the permeate side, thereby reducing the permeate production rate. This tightening of the valve will unbalance the pressure system, so that the TMPₒᵤₜ is no more equal with TMPᵢₙ. The equilibrium will according to the present invention be re-established with regulation of the speed of pump 20. The process may continue for as long as the permeate production rate is acceptable.

In the second method the intention is to obtain a generally constant permeate product stream 14. The flowrate of stream 14 is measured by the flowrate sensor 19. As a result of fouling the flowrate will become reduced. The valve 22 is controlled by the same control unit connected to the flowrate sensor 19. When the flowrate is reduced the control unit increases the opening of the valve 22 to regain the intended production rate. The further opening of the valve 22 results in a reduced permeate pressure especially at the inlet to the membrane module, resulting in an increase in the trans-membrane pressure, TMPᵢₙ will increase more than TMPₒᵤₜ, accordingly the TMP is no longer uniform. The control unit 30 will receive the signal from the pressure sensors 32, 33, 34 and 35, obtain the TMPs and as TMP has gone up the control unit will signal the pump 20 to increase the effect to bring the TMP back to the uniform level.

Accordingly the present invention provides the advantages of utilizing a uniform trans-membrane pressure combined with a high degree of freedom for regulating the velocities on the retentate side.

Additionall measurement equipment is usually employed to determine the velocity and concentration of permeate product and/or the retentate stream leaving the membrane filter assembly. Further parameters which must be kept within and optimal range are the cross flow velocities, that is the velocity of the permeate and the retentate circulating in the recycle loops.

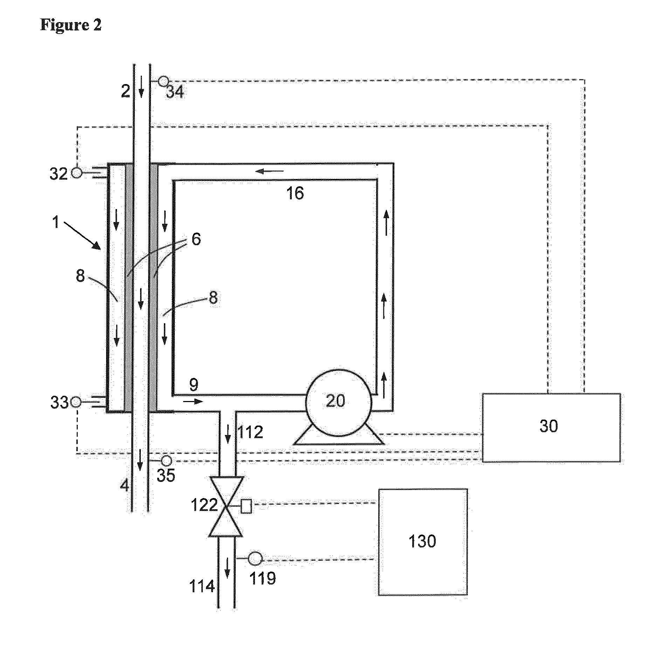

Figure 2 illustrates an alternative of a membrane filtration assembly according to the present invention. Equal elements are equally numbered as in figure 1. In this embodiment the position of the permeate product outlet 112 has been moved to a position upstream to the pump 20. The valve 122 controls the production rate of the permeate product stream 114, the flow rate of permeate product is measured by the velocity sensor 119. A second control unit 130 controls the valve 122 based on keeping the flow rate measured by the velocity sensor 119 constant.

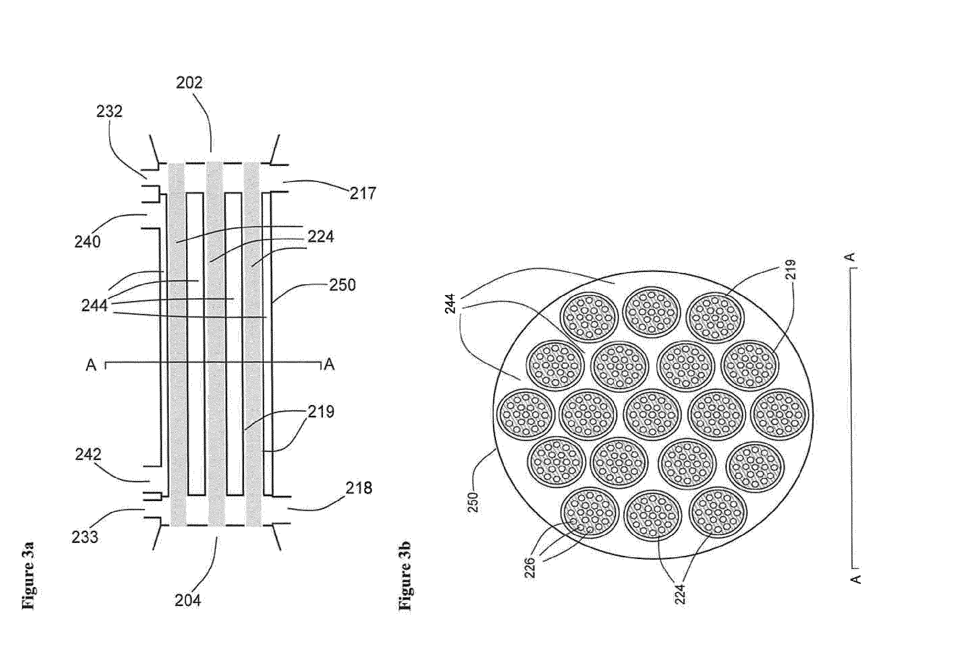

Figure 3 a and 3b illustrates an embodiment of a membrane filtration module according to a further embodiment of the present invention and applicable for use in the membrane filtration assembly and method according to the present invention. Figure 3 a illustrates a cross sectional view of the module along the longitudinal axis. The inlet side is at the top and the outlet side on the bottom. Figure 3b illustrates a cross sectional view of the filter module along the axis A-A in figure 3a.

The filter module comprises a retentate or fluid feed inlet 202 and a retentate outlet 204, ceramic membrane modules 224 arranged there between comprises retentate fluid channels 226. Permeate is transferred from the retentate fluid channels across the membrane and into the permeate channels 219. In the top section the permeate channels are in fluid connection with each other and with a permeate inlet 217. A pressure sensor 232 is arranged in a closed fluid connection port and allows for pressure measurement in the permeate inlet area. At the opposite bottom end a similar arrangement with a permeate outlet 218 and a pressure sensor 233 is illustrated. The walls defining the permeate channels 219 together with an outer shell 250 defines the space 244. The inlet 240 and outlet 242 to the space 244 provides the possibility to circulated a temperature control liquid controlling the temperature of the permeate side of the membrane modules. The number and configuration of the permeate channels including membrane modules can be selected freely. This illustrated filtration module is an example of an applicable configuration and other systems with different configuration and without heat transfer possibilities can equally be controlled by the method according to the present invention.

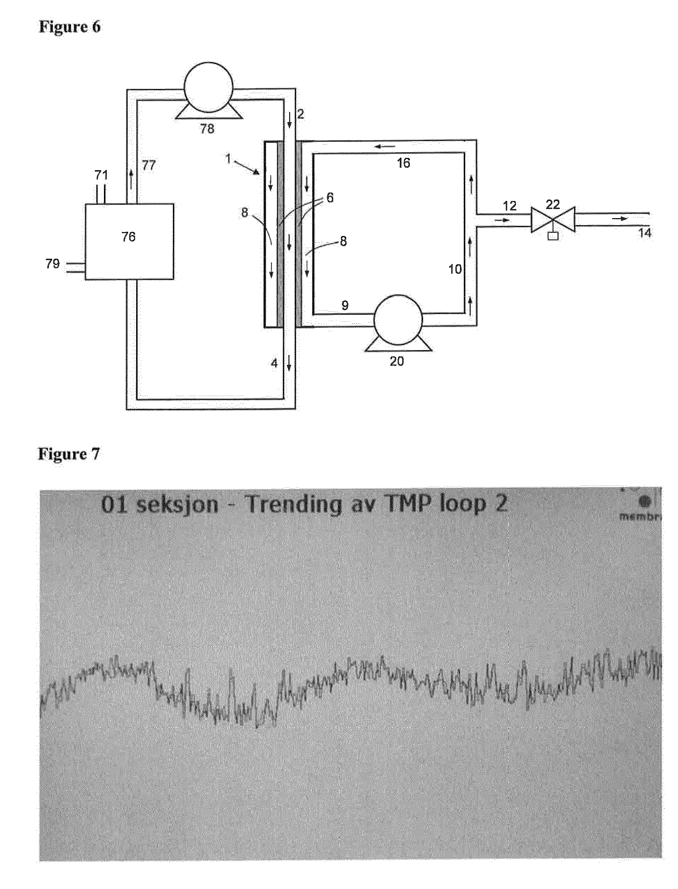

Figure 4 and 6 illustrate membrane filtration assembly according to the present invention further illustrating possible configurations of retentate circulation systems. On figure 4 a feed stream 64 to be filtrated is added to the retentate stream 4 leaving the filter by the feed pump 65. A retentate circulation pump forces the combined stream to proceed to the retentate inlet 2 to the filter module. A valve 61 controls the production of retentate product 62. In the system according to figure 6 the retentate is kept in a tank 76. A retentate stream 77 is fed via pump 78 to the retentate/feed 2 inlet and the retentate stream 4 from the filter is returned to the tank 76. The tank 76 is further provided with an inlet 71 for a feed stream and an outlet 79 to remove concentrated retentate. The system according to figure 6 may be run either as a batch system where the inlet 71 is used to fill the tank prior to start up of the filtration process or as a continues process where feed is and continuously or a combination thereof.

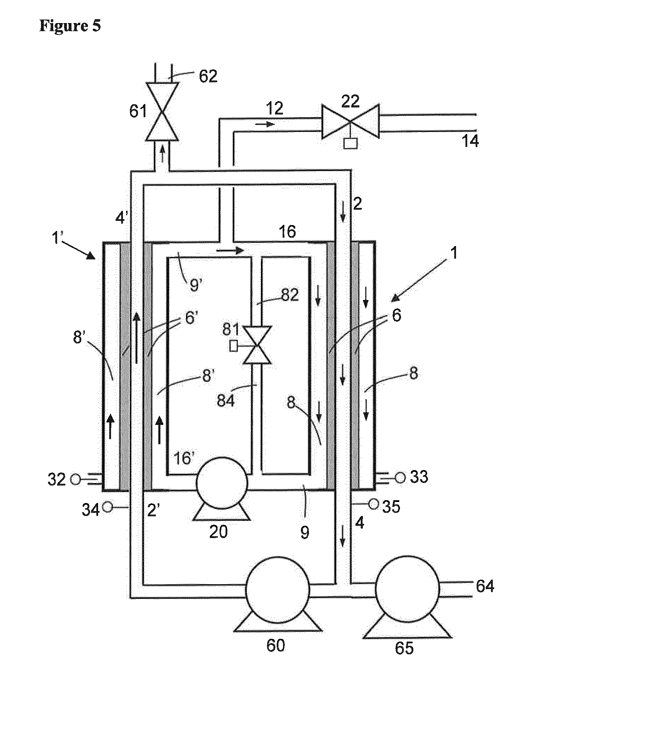

Figure 5 illustrates a membrane filtration assembly comprising two filtration modules connected in series. A feed stream 64 is fed into the system by feed pump 65. The feed pump 65 is responsible for the over all pressure of the filtration system. The feed stream is mixed with the retentate stream 4 from the first filtration module 1 and by retentate pump 60 fed as retentate inlet stream 2' to the second filtration module 1'. All reference numbers on the second filtration module are marked with a hyphen but are otherwise number as in the previous figures. The retentate stream 4' leaving the second filtration module is recycled as retentate inlet stream 2 to the first filtration module 1. A retentate product stream 62 is removed via valve 61 prior to the recycling. The permeate stream from the first module is via pump 20 entered as permeate recycle stream 16' to the second module and similarly the permeate outlet stream 9' from the second module is entered as permeate recycle stream 16 to the first module. However the permeate product stream 14 is removed there from via valve 22 upstream to the first module. The pressure sensors 32 and 34 are applied to obtain knowledge of the trans-membrane pressure at the inlet, measured at the inlet to the second filtration module 1'. The pressure sensors 33 and 35 are applied to obtain knowledge of the trans-membrane pressure at the outlet, measured at the outlet to the first filtration module 1.Figure 5 further illustrates an optional additional feature. A bypass conduit 82, 84 is arranged between the permeate outlet stream 9' from the second filtration module and the inlet to the permeate circulation pump 20. A controllable valve 81 is arranged on the bypass conduit 82, 84. The controllable bypass provides for optional additional adjustment of the permeate circulation flow and equalization of the trans-membrane pressure.

### Examples

Pilot scale experiments have been performed with a system similar/according to figure 5, but without the optional bypass 82, 84. The graph on figure 7 shows the TMP at the inlet and the outlet over time when employing a system according to the present invention. As can be seen from the graph the system allows for a continuously adjustment so that the effect of constant changes in trans-membrane pressure even the minor ones are being adjusted for. The graph shows one curve for the trans-membrane pressure at the inlets over time and one curve for the trans-membrane pressure at the outlets over time. The system according to the present invention provides that the two curves follow each other with minor deviations even though the trans-membrane pressure varies over time from a preselected intended trans-membrane pressure. This results in an almost equal load over the entire membrane surface.

## Claims

1. A membrane filtration assembly, comprising
- at least one membrane filter module (1);
- a permeate recycle loop; and
- a trans-membrane pressure control system;
wherein
- said at least one membrane filter module comprises a retentate inlet (2), a retentate outlet (4), a permeate inlet (17), and a permeate outlet (18);
- said permeate recycle loop bringing the permeate outlet in fluid communication with the permeate inlet via a flow providing means (20), where the permeate recycle loop comprises a permeate product outlet (12) with a flow control means (22) controlling the outlet of permeate product (14) from the permeate recycle loop;
- said trans-membrane pressure control system comprises a first pressure sensor (34) arranged in or near the retentate inlet (2), a second pressure sensor (32) arranged in or near the permeate inlet (17), a third pressure sensor (35) arranged in or near the retentate outlet (4), a fourth pressure sensor (33) arranged in or near the permeate outlet (18) and a control unit (30) connected to receive signals from the four pressure sensors and either connected to send a regulating signal to said flow providing means (20) or connected to send a regulating signal to said flow providing means (20) and said flow control means (22).

2. Membrane filtration assembly according to claim 1, wherein said control unit (30) is connected to send a regulating signal to said flow providing means (20) and to said flow control means (22).

3. Membrane filtration assembly according to claim 1, wherein the first pressure sensor and the second pressure sensor form part of a first differential pressure transmitter, and the third pressure sensor and the fourth pressure sensor form part of a second differential pressure transmitter, where the first and the second differential pressure transmitters are connected to the control unit.

4. Membrane filtration assembly according to claim 2, wherein the control unit regulates the flow control means (22) to provide a stable and constant trans-membrane pressure at the inlets.

5. Membrane filtration assembly according to claim 2, wherein the control unit regulates said flow providing means to provide a stable and constant trans-membrane pressure at the outlets.

6. Membrane filtration assembly according to claim 1, further comprising a flow sensor (119) downstream of said flow control means connected to send a signal to the control unit or a second control unit (130), and wherein the control unit or the second control unit regulates said flow control means to provide a constant permeate product flow.

7. Membrane filtration assembly according to claim 1, wherein the control unit obtains the trans-membrane pressure at the inlets and the trans-membrane pressure at the outlets and regulates said flow providing means to equalize the trans-membrane pressure at the outlets to the trans-membrane pressure at the inlets.

8. Membrane filtration assembly according to claim 1, wherein the at least one membrane filter module comprises a ceramic membrane filter.

9. Membrane filtration assembly according to claim 1, wherein said flow control means is an adjustable valve.

10. Membrane filtration assembly according to claim 1, wherein said flow providing means is a pump.

11. Method of controlling the trans-membrane pressure of a membrane filtration assembly,
said membrane filtration assembly comprising
- at least one membrane filter module comprising a retentate inlet, a retentate outlet, a permeate inlet, and a permeate outlet; and
- a permeate recycle loop bringing the permeate outlet in fluid communication with the permeate inlet via a flow providing means, where the permeate recycle loop comprises a permeate product outlet with a flow control means controlling the outlet of permeate product from the permeate recycle loop;
said method comprising the following steps:
measuring the pressure in or near the retentate inlet, the permeate inlet, the retentate outlet, and the permeate outlet and calculating the trans-membrane pressure at the inlets and the trans-membrane pressure at the outlets; or
a) measuring the trans-membrane pressure at the inlets and the trans-membrane pressure at the outlets; and either
b) regulating said flow providing means to keep the trans-membrane pressure at the outlets equal to the trans-membrane pressure at the inlets; or
c) regulating said flow controlling means to keep the trans-membrane pressure at the inlets equal to the trans-membrane pressure at the outlets; or
d) regulating said flow controlling means to keep a constant flow and regulating said flow providing means to keep the trans-membrane pressure at the outlets equal to the trans-membrane pressure at the inlets.

12. Method according to claim 11, wherein the method comprises regulating said flow control means to keep the trans-membrane pressure at the inlets stable and constant.

13. Method according to claim 11, wherein the method comprises measuring the flow of permeate product and regulating said flow control means to keep the flow of permeate product constant.

14. Method according to claim 11, wherein the trans-membrane pressure at the outlet deviates less than 0.1 bar from the trans-membrane pressure at the inlet.

15. Method according to claim 11, wherein the membrane filtration assembly is the membrane filtration assembly of claim 1.
